# EUROPEAN PATENT SPECIFICATION

(11) **EP 2 201 264 B1**
(45) Date of publication and mention of the grant of the patent: **17.06.2015**
(21) Application number: 08702263.8
(22) Date of filing: 10.01.2008
(51) Int. Cl.: F16G 1/10, F16G 1/28

(54) **POWER TRANSMISSION BELT COMPRISING A COATING TREATMENT OF THE FABRIC AND COATING TREATMENT THEREOF**
TREIBRIEMEN MIT EINER BESCHICHTUNGSBEHANDLUNG DES GEWEBES UND BESCHICHTUNGSBEHANDLUNG DAVON
COURROIE DE TRANSMISSION DE PUISSANCE COMPRENANT UN TRAITEMENT PAR REVÊTEMENT DU TISSU ET TRAITEMENT PAR REVÊTEMENT DE CELUI-CI

(30) Priority: 12.09.2007 IT TO20070643
(43) Date of publication of application: 30.06.2010
(73) Proprietor: DAYCO EUROPE S.r.l., 66013 Chieti (IT)
(72) Inventor: BALDOVINO, Carlo, I-65125 Pescara (IT); DI MECO, Marco, I-65129 Pescara (IT)
(74) Representative: Fiussello, Francesco
(86) International application number: PCT/IB2008/000102
(87) International publication number: WO 2009/034422

(56) References cited:
- EP-A1- 1 698 662
- WO-A-2005/038294
- WO-A-2005/080821
- GB-A- 1 042 301
- GB-A- 2 349 113
- US-A1- 2005 153 138
- US-A1- 2007 077 443
- US-A1- 2007 191 163
- US-B1- 6 352 488
- D. HERTZ: 'Fluorine-Containing Elastomers', [Online] 31 January 2002, pages 1 - 17 Retrieved from the Internet: <URL:http://www.sealseastern.com/PDF/Fluoro AcsChapter.pdf> [retrieved on 2013-04-08]

## Description

### TECHNICAL FIELD

The present invention relates to a belt comprising a fabric coating or protective treatment and to the corresponding treatment.

### BACKGROUND ART

Each component of the belt contributes to increasing the performance in terms of mechanical resistance so as to decrease the risk of failure of the belt and to increase the specific transmissible power.

The cords contribute particularly to ensure the necessary mechanical characteristics of the belt and contribute to the elastic modulus of the belt itself and in particular thus ensure maintenance of the performance of the belt over time.

The covering fabric reduces the coefficient of friction on the working surface, and in the case of toothed belts reduces the deformability of the teeth and above all reinforces the root of the tooth thus preventing failure thereof.

The covering fabric used can be constituted by a single layer or, alternatively, a double layer so as to guarantee a greater robustness and higher rigidity.

The fabric is normally treated with an adhesive, for example RFL (resorcinol and formaldehyde lattice) to increase the adherence between the body and the fabric itself.

Moreover many methods are employed for increasing the wear resistance of drive belts by modifying the structure of the covering fabric or carrying out different treatments on the fabric, for example, treatments in which halogenated polymers are used, e.g., PTFE-based treatments.

Alternatively, also known from the patent applications Nos. JP2001304343 and JP2001208137 are treatments, also referred to as adhesive compositions, for fabrics of toothed belts comprising an anti-friction material chosen in the group constituted by molybdenum sulphide and graphite.

All the above treatments act by modifying the friction coefficient of the working surface, which is more subject to wear. All the treatments with these anti-friction materials do not, however, provide an optimal resistance to wear.

In fact, in the latter case, the treatment enables only a slight increase in the resistance to abrasion to be obtained, and the belt still presents a high noise level, in particular when it meshes on the pulley.

In order to overcome the above problem, the present applicant has proposed a radical change in the structure of the belt, as described in the patent No. EP1157813, which consists in coating the covering fabric with a resistant layer comprising a fluorinated plastomer, an elastomeric material, and a vulcanizing agent, where the fluorinated plastomer is present in a greater amount than the elastomer. The layer is distinct from the fabric, does not permeates the fabric, and is advantageously applied to the fabric by means of a calendering step. Advantageously present between the fabric and the resistant layer is an adhesive layer.

The use of the resistant layer has enabled good results to be achieved in terms of increase in resistance to wear, in so far as the working surface of the belt is in this case constituted by the resistant layer itself and not by the fabric, the resistant layer presenting a lower noise level during meshing of the teeth of the belt with the pulley.

Also said treatment is not, however, allays sufficiently effective when the belts are used in the presence of oil, i.e., in systems in which the belt is located within the engine block and hence comes into direct contact with splashes of oil or even works partially immersed in oil. In these cases, the known treatments that comprise anti-friction materials, which were studied to reduce the friction exerted by the toothed belt during meshing with the pulley, do not seem suitable.

In fact, even though it is necessary to maintain a good resistance to abrasion, it is also at the same time necessary to ensure a high resistance to oil, which will enable prevention of any swelling of the toothed belt and consequent wear of the fabric with possible failure of the tooth and hence reduction in belt life.

In addition, in systems where the belt is used in direct contact with or partially immersed in oil, frequently the engine oil mixturees with impurities of various kind and in particular with petrol.

Known treatments do not afford an adequate resistance and do not constitute an adequate barrier to penetration of oil in environments where the oil is mixtureed with petrol.

In addition, know treatments in oil at a high temperature tend to age fast, this frequently leading to a delamination of the protective layer or to an early loss of the coating by the fabric. The loss of the coating results in a loss of the barrier capacity in regard to oil exerted by the coating itself.

GB2349113 discloses a toothed belt comprising a body made of a first elastomeric material comprising a working surface covered with a fabric said fabric having been subjected to a first treatment wherein said first treatment provides a coating comprising at least one fluorinated polymer.

Hertz Fluorine Containing Elastomers, pages 1-17, know from the website www.sealseastern.com/PDF/FluoroAcsChapter.pdf discloses the use of fluoroelastomer in automotive applications.

There is hence a continuous search for solution that will enable toothed belts to be obtained capable of providing simultaneously a high resistance to wear throughout the range of operating temperatures of the belt and a low noise level at low and high r.p.m., especially when the belt is used in contact with oil.

In particular, research is directed towards belts that moreover enable prevention of swelling of the belt when this is used in the presence or continuous splashes of oil or is partially immersed in oil at high temperature in the presence of petrol.

### DISCLOSURE OF INVENTION

The aim of the present invention is consequently to provide a coating treatment of a fabric for a toothed belt and a corresponding toothed belt presenting a high resistance to abrasion and hence to wear and at the same time a low level of noise during operation at high and low r.p.m., as well as an optimal resistance throughout the range of temperatures of use and above all a barrier capacity to oil mixtureed with petrol. According to the present invention, said aim is achieved by a belt as specified in Claim 1.

According to the present invention, moreover envisaged is a use as specified in Claim 11.

### BRIEF DESCRIPTION OF THE DRAWINGS

For a better understanding of the present invention, there now follows a description thereof also with reference to the annexed figures, wherein:
- Figure 1 is a partial perspective view of a toothed belt according to the present invention;
- Figure 2 is a diagram of a first distribution-control system, which uses a first toothed belt according to the present invention;
- Figure 3 is a diagram of a second distribution-control system, which uses a second toothed belt according to the present invention;
- Figure 4 is a diagram of a third distribution-control system, which uses a third toothed belt according to the present invention;
- Figure 5 is a table with the results of the tests conducted on the treatments according to the invention and according to the known art;
- Figure 6 is a graph showing the variation of the width of known belts and belts according to the present invention;
- Figure 7 is a further graph showing the variation of the width of known belts and belts according to the present invention;
- Figure 8 is a further graph showing the variation of the width of known belts and belts according to the present invention; and
- Figure 9 is a graph showing the variation of the width of known belts and belts according to the present invention.

### BEST MODE FOR CARRYING OUT THE INVENTION

In what follows, by the expression "the elastomeric material is basically constituted" it is meant that the elastomeric material can comprise small percentages of other polymers or copolymers, which can be added to the elastomeric material without varying the chemical-physical characteristics of the mixture and hence without departing from the scope of the present invention.

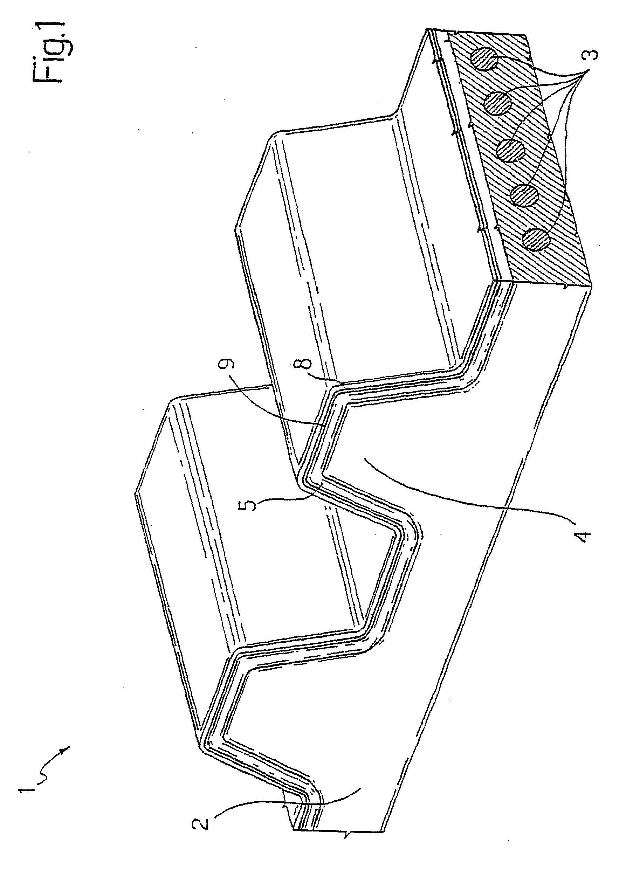

In Figure 1 designated as a whole by 1 is a toothed belt, as example of the present invention. The belt 1 comprises a body 2 made of elastomeric material, embedded in which is a plurality of longitudinal filiform resistant inserts 3.

The body 2 has a toothing 4, which is covered by a covering fabric 5.

Advantageously, the body 2 is made of a mixture made up of one or more elastomers, which are referred to as a whole as "first elastomeric materials".

Advantageously, the mixture of the first elastomeric material comprises a fluorinated elastomer.

More advantageously, the fluorinated elastomer is present in the body in an amount higher than 95 phr.

It has proven particularly advantageous for reducing swelling of the belt in oil in the presence of petrol to use a body mixture basically constituted by a fluorinated elastomer.

Advantageously, the fluorinated elastomer is a copolymer chosen in the group constituted by fluoride - hexafluoropropylene, vinylidenfluoride-hexafluoropropylene, vinylidenfluoride-hexafluoropropylene-tetrafluoroethylene, vinylidenfluoride-tetrafluoroethylene-perfluorovinylether, tetrafluoroethylene-perfluorovinylether, tetrafluoroethylene-propylene, tetrafluoroethylene-propylene- vinylidenfluoride, hexafluoropropylene/vinylidenfluoride/tetrafluoroethylene/brom o- or iodo- or chloro-olefin fluorinated tetrapolymer, and mixtures of these polymers.

More advantageously, it is chosen in the group constituted by hexafluoropropylene/vinylidenfluoride/monochloro-trifluoroethylene terpolymer, hexafluoropropylene/vinylidenfluoride/tetrafluoroethylene terpolymer, hexafluoropropylene/vinylidenfluoride/tetrafluoroethylene/brom o- or iodo- or chloro-olefin fluorinated tetrapolymer.

Even more advantageously, the fluorinated elastomer is a hexafluoropropylene/vinylidenfluoride/monochloro-trifluoroethylene or tetrafluoroethylene terpolymer.

Advantageously, the fluorine content in the fluorinated elastomer is comprised between 64 and 71 wt%.

Even more advantageously it is between 66 wt% and 69 wt%.

It is possible to use numerous types of fluorinated elastomers, for example, the ones known under the tradenames VITON marketed by Dupontdow elastomers, AFLAS marketed by Asahi Industry, TECHNOFLON FKM marketed by Ausimont-Solvay, DYNEON marketed by Dyneon, DAI-EL marketed by Daikin Industries.

More advantageously, vulcanizable peroxide fluoroelastomers are used, in particular DAI-EL, for example a DAI-EL G-801 with 66 wt% fluorine content.

Alternatively, it is also possible to use the fluorinated elastomer in a mixture with further elastomeric materials.

Advantageously, the fluorinated elastomer is present in the body for an amount higher than 70 wt% with respect to the other elastomeric components of the mixture to ensure the necessary capacity of resistance to ageing.

In these cases the fluorinated elastomer is advantageously mixed with one or more copolymers, obtained starting from a diene monomer and a monomer containing nitrile groups.

More advantageously, the first elastomeric material comprises one or more copolymers formed starting from a monomer containing nitrile groups and from a diene.

Advantageously, the monomers containing nitrile groups are in a weight percentage of between 34 and 49 wt% with respect to the totality of the final copolymers.

More advantageously, they are between 39 and 43 wt%.

More advantageously, the copolymer or copolymers used is/are hydrogenated acrylonitrile butadiene (HNBR).

Advantageously, the HNBR used is at a high degree of hydrogenation, for example, the so-called fully saturated HNBR can be used and hence having a residual weight percentage of double bonds of 0.9 wt% at the most, but alternatively HNBR with a lower degree of unsaturation can also be used, such as, for example, HNBRs having degrees of saturation of 4 wt% or 5.5 wt%, the so-called partially saturated HNBR.

Some examples of HNBR copolymers that can be used in the body mixture, but also in the different treatments of the various elements constituting the toothed belt, are the copolymers belonging to the family of the Therbans produced by Lanxess, such as Therban 3407 with 34 wt% of nitrile groups and a degree of hydrogenation of at the most 0.9 wt%, Therban 3406 with 34 wt% of nitrile groups and a degree of unsaturation of at the most 0.9 wt%, Therban 3607 with 36 wt% of nitrile groups and a degree of unsaturation of at the most 0.9 wt%, Therban 3446 with 34 wt% of nitrile groups and a degree of unsaturation of at the most 4 wt%, Therban 3447 with 34 wt% of nitrile groups and a degree of unsaturation of at the most 5.5 wt%, Therban 3627 with 36 wt% of nitrile groups and a degree of unsaturation of at the most 2 wt%, Therban 3629 with 36 wt% of nitrile groups and a degree of unsaturation of at the most 2 wt%, Therban 3907 with 39 wt% of nitrile groups and a degree of unsaturation of at the most 0.9 wt%.

Alternatively, it is also possible to use the HNBRs produced by Nippon Zeon under the tradename ZETPOL. In particular, ZETPOL 2000 with 36 wt% of nitrile groups and a degree of unsaturation of at the most 0.9 wt%, ZETPOL 2000L with 36 wt% of nitrile groups and a degree of unsaturation of at the most 0.9 wt%, ZETPOL 2010 with 36 wt% of nitrile groups and a degree of unsaturation of at the most 4 wt%, ZETPOL 2010L with 36 wt% of nitrile groups and a degree of unsaturation of at the most 4 wt%, ZETPOL 2010H with 36 wt% of nitrile groups and a degree of unsaturation of at the most 4 wt%, ZETPOL 2020 with 36 wt% of nitrile groups and a degree of unsaturation of at the most 5.5 wt%, ZETPOL 2020L with 36 wt% of nitrile groups and a degree of unsaturation of at the most 5.5 wt%.

Even more advantageously, a polymer is used constituted by a mixture of one or more copolymers, obtained starting from a diene monomer and a monomer containing nitrile groups, modified with a salt of an unsaturated carboxylic acid.

At least one of the copolymers is modified with a salt of an unsaturated carboxylic acid. Advantageously, a zinc salt of polymethacrylic acid is used.

Advantageously, the second elastomeric material is HNBR modified with a zinc methacrylate also referred to as zinc salt of polymethacrylic acid. Advantageously, the zinc salt of polymethacrylic acid is added in an amount comprised between 10 and 60 wt%.

Advantageously, the HNBR modified with zinc salts presents an unsaturation lower than 15 wt%, more preferably, between 5 and 10 wt%.

For example, advantageously used are the elastomers marketed by Zeon under the tradenames: ZSC 1295, ZSC 2095, ZSC 2195, ZSC 2295, ZSC 2295L, ZSC 2295R and ZSC 2395.

More advantageously ZSC 2095 is used.

The mixture in the first elastomeric material can moreover comprise conventional additives, such as, for example, reinforcement agents, fillers, pigments, stearic acid, accelerators, vulcanizing agents, antioxidants, activators, initiators, plasticizers, waxes, pre-vulcanization inhibitors, antidegradants, process oils and the like.

Advantageously, carbon black can be employed as filler, which is advantageously added in an amount comprised between 0 and 80 phr, more advantageously, approximately 40 phr. Advantageously, light reinforcing fillers are added, such as talcum, calcium carbonate, silica and silicates in amounts advantageously comprised between 0 and 80 phr, advantageously approximately 40 phr. It is moreover advantageous to use silanes in an amount comprised between 0 and 5 phr.

Advantageously, zinc and magnesium oxides are added in an amount of between 0 and 15 phr.

Advantageously, ester plasticizers are added, such as trimellitate or ether esters in an amount advantageously comprised between 0 and 20 phr.

Advantageously, vulcanizing co-agents are added, such as triallyl cyanides, organic or inorganic methacrylate, such as salts of metals in an amount advantageously comprised between 0 and 20 phr or organic peroxides, such as, for example, isopropyl benzene peroxide in an amount advantageously comprised between 0 and 15 phr.

Advantageously, the mixture in the elastomeric material moreover comprises reinforcement fibres, more advantageously in an amount comprised between 2 and 40 phr, even more advantageously 20 phr. Advantageously, the reinforcement fibres have a length comprised between 0.1 and 10 mm.

The use of fibres enables a further increase in the mechanical characteristics of the mixture constituting the body.

Advantageously, the reinforcement fibres comprise aromatic polyamides, more advantageously paramides, for example Technora© fibres can be advantageously used, which can be adherized to the mixture by means of an RFL-based treatment. For example, the lattice used can have a base of VP-SBR, i.e., a copolymer of vinylpiridine and styrene-butadiene.

Particularly effective have proven aramidic fibres, such as, for example, Technora fibres of Teijn having a length of 1 mm.

The covering fabric 5 of the toothing 4 or the covering fabric 7 of the back 6 can be constituted by one or more layers and can be obtained via different weaving techniques, for example, by means of the weaving technique known as 2x2 twill.

Alternatively, the covering fabric 5 can be obtained according to weaving modalities that will enable at least one rough surface to be obtained to improve mechanical adhesion.

The covering fabric 5 of the teeth advantageously comprises aliphatic or aromatic polyamide, more advantageously aromatic polyamide (aramide).

Advantageously, the fabric used has a composite structure constituted by a weft and a warp, in which the weft is constituted by threads of weft formed each by an elastic thread as core and a pair of composite threads wound around the elastic thread; each composite thread comprises a thread with high thermal and mechanical resistance and at least one coating thread wound around the thread with high thermal and mechanical resistance. Advantageously, each composite thread comprises a thread with high thermal and mechanical resistance and a pair of coating threads wound around the thread with high thermal and mechanical resistance. The elastic thread is advantageously made of polyurethane. The thread with high thermal and mechanical resistance is advantageously made of para-aromatic polyamide.

The fabric is generally subjected to an RFL treatment.

According to the present invention, the fabric 5 is moreover subjected to a first elastomer-based treatment and/or a second elastomer-based treatment. According to the present invention, at least one of the treatments comprises a fluorinated elastomer.

It has surprisingly been found that a fluorinated-elastomer-based treatment enables, in fact, formation of an effective barrier against penetration of the oil in the systems in which the belt is used in direct contact or partially immersed in oil within the engine block.

Both the first treatment and the possible second treatment coats and affords a protective coating of the fabric and surprisingly enables all the drawbacks of traditional belts to be overcome and the duration of the belt to be prolonged, increasing its resistance to wear.

The first treatment is performed, for example, by immersion in an aqueous solution of organic solvent and is advantageously applied to the fabric by spreading. The first treatment is carried out in a mixture of water and solvent containing a composition comprising a fluorinated elastomer.

Advantageously, the fluorinated elastomer is a copolymer chosen in the group constituted by fluoride-hexafluoropropylene, vinylidenfluoride-hexafluoropropylene, vinylidenfluoride-hexafluoropropylene-tetrafluoroethylene, vinylidenfluoride-tetrafluoroethylene-perfluorovinylether, tetrafluoroethylene-perfluorovinylether, tetrafluoroethylene-propylene, tetrafluoroethylene-propylene- vinylidenfluoride, hexafluoropropylene/vinylidenfluoride/tetrafluoroethylene/brom o- or iodo- or chloro-olefin fluorinated tetrapolymer and mixtures of these polymers.

More advantageously, it is chosen in the group constituted by hexafluoropropylene/vinylidenfluoride/monochloro-trifluoroethylene terpolymer, hexafluoropropylene/vinylidenfluoride/tetrafluoroethylene terpolymer, hexafluoropropylene/vinylidenfluoride/tetrafluoroethylene/brom o- or iodo- or chloro-olefin fluorinated tetrapolymer.

Even more advantageously, the fluorinated elastomer is a hexafluoropropylene/vinylidenfluoride/monochloro-trifluoroethylene or tetrafluoroethylene terpolymer.

Particularly advantageous is moreover the use of a copolymer with 51 wt% vinylidenfluoride, 33 wt% hexafluoropropylene, and 17 wt% tetrafluoroethylene.

Advantageously, the fluorine content in the fluorinated elastomer is comprised between 64 and 71 wt%.

Even more advantageously it is between 66 wt% and 69 wt%.

It is possible to use numerous types of fluorinated elastomers, for example, the ones known under the tradenames VITON marketed by Dupontdow elastomers, AFLAS marketed by Asahi Industry, TECHNOFLON FKM marketed by Ausimont-Solvay, DYNEON marketed by Dyneon, DAI-EL marketed by Daikin Industries.

More advantageously, peroxide-vulcanizable fluoroelastomers are used, in particular TECHNOFLON FKM of the sort described in the following patents: EP967248 or EP1031606 or EP1262497.

Particularly advantageous has proven the use of the material TECHNOFLON P757.

The first treatment is an alternative to or integrates the second treatment.

The second treatment is performed advantageously with a mixture comprising a combination of one or more polymeric materials appropriately selected.

The second treatment advantageously comprises a mixture of:
a) between 0 and 100 phr of a second elastomeric material formed by a mixture of one or more copolymers, obtained starting from a diene monomer and a monomer containing nitrile groups;
b) between 0 and 100 phr of a fluorinated elastomer.

According to the present invention said treatment further includes an antifriction agent. Furthermore, according to the present invention, the antifriction agent is chosen in the group constituted by a fluorinated plastomer, graphite, molybdenum sulphide and copper dust.

In the case where the second treatment does not present the fluorinated elastomer, it is necessary for the second treatment to be integrated with the first treatment for the necessary improvements to be obtained in terms of reduction in swelling.

Advantageously, the second elastomeric material is present in amounts comprised between 5 and 100 phr.

Advantageously, the fluorinated elastomer is present in an amount comprised between 5 and 100 phr.

More advantageously, the ratio between the second elastomeric material and the fluorinated elastomer ranges from 1:3 to 3:1.

Even more advantageously the ratio between the second elastomeric material and the fluorinated elastomer is between 1:1.5 and 1:2.5.

Advantageously, the second elastomeric material is modified with a salt of an unsaturated carboxylic acid.

Advantageously, the second elastomeric material consists of one or more copolymers formed starting from a monomer containing nitrile groups and from a diene in which the monomers containing the nitrile groups are in a weight percentage preferably comprised between 30 and 39 wt% with respect to the totality of the final copolymers. More advantageously, the nitrile groups are in a weight percentage of between 34 and 43 wt% with respect to the totality of the final copolymers.

Excellent results have been obtained in terms of resistance to abrasion when one of the copolymers is modified with a salt of an unsaturated carboxylic acid. More advantageously, a zinc salt of polymethacrylic acid is used.

Advantageously, the second elastomeric material is chosen in the group constituted by HNBR and XHNBR.

Advantageously, the second elastomeric material is an HNBR modified with a zinc salt of polymethacrylic acid. Advantageously, the zinc salt of polymethacrylic acid is added in an amount of between 10 and 60 wt% with respect to HNBR. Advantageously, the HNBR modified with zinc salts has an unsaturation lower than 15 wt%, more preferably between 0.1 and 10 wt%.

For example, advantageously used are the elastomers marketed by Zeon under the tradenames: ZSC 1295, ZSC 2095, ZSC 2195, ZSC 2295, ZSC 2295L, ZSC 2295R and ZSC 2395; or else the product Lanxess Therban ART1725, or a mixture between Therban 3407 or 3907 or 4307 or 3446 or 3467 and Sartomer SR706 76 phr i.e., a difunctional salt of acrylic acid. Advantageously, the salt of acrylic acid is present in an amount comprised between 10 and 60 wt%.

Advantageously the fluorinated elastomer is a copolymer chosen in the group constituted by fluoride-hexafluoropropylene, vinylidenfluoride-hexafluoropropylene, vinylidenfluoride-hexafluoropropylene-tetrafluoroethylene, vinylidenfluoride-tetrafluoroethylene-perfluorovinylether, tetrafluoroethylene-perfluorovinylether, tetrafluoroethylene-propylene, tetrafluoroethylene-propylene vinylidenfluoride, hexafluoropropylene/vinylidenfluoride/tetrafluoroethylene/brom o- or iodo- or chloro-olefin fluorinated tetrapolymer and mixtures of these polymers.

More advantageously, it is chosen in the group constituted by terpolymer hexafluoropropylene/vinylidenfluoride/monochloro-trifluoroethylene, terpolymer/hexafluoropropylene/vinylidenfluoride/tetrafluoroet hylene, hexafluoropropylene/vinylidenfluoride/tetrafluoroethylene/brom o- or iodo- or chloro-olefin fluorinated tetrapolymer.

Even more advantageously, the fluorinated elastomer is a hexafluoropropylene/vinylidenfluoride/monochloro-trifluoroethylene terpolymer or monochloro-tetrafluoroethylene.

Particularly advantageous is moreover the use of a copolymer with 51 wt% vinylidenfluoride, 33 wt% hexafluoropropylene, and 17 wt% tetrafluoroethylene.

Advantageously, the fluorine content in the fluorinated elastomer is comprised between 64 and 71 wt%.

Even more advantageously, it is between 66 wt% and 69 wt%.

It is possible to use numerous types of fluorinated elastomers, for example, the ones known under the thradenames VITON marketed by Dupontdow elastomers, AFLAS marketed by Asahi Industry, TECHNOFLON FKM marketed by Ausimont-Solvay, DYNEON marketed by Dyneon, DAI-EL marketed by Daikin Industries.

More advantageously peroxide-vulcanizable fluoroelastomers are used, in particular TECHNOFLON FKM of the sort described in the following patents: EP967248 or EP1031606 or EP1262497.

Particularly advantageous has proven the use of the material TECHNOFLON P757.

More advantageously, the fluorinated plastomer is present in an amount higher than 100 phr, and even more advantageously comprised between 100 to 150 phr.

Advantageously, the fluorinated plastomer is a PTFE or polytetrafluoroethylene.

More advantageously, the fluorinated plastomer is a PTFE marketed by FLUON, for example FLUON 1700.

Alternatively, the fluorinated plastomer can be previously mixtureed with the fluorinated elastomer. For example, the fluorinated elastomer can be microcoagulated within the fluorinated elastomer.

For example, it has proven particularly advantageous to use a mixture containing a fluorinated elastomer in an amount of from 60 wt% to 90 wt%, preferably 70 wt%, comprising PTFE in an amount of from 10 wt% to 40 wt%, preferably 30 wt%.

The second treatment moreover advantageously comprises a vulcanizing agent, more advantageously a peroxide.

In order to enable use -of a peroxide-based vulcanizing process, particularly advantageous for the purposes of facilitating the process of production of the belt are peroxide-vulcanizable fluorinated elastomers.

The peroxide is normally added in an amount comprised between 1 and 15 wt% with respect to the weight of elastomeric material. More advantageously, the peroxide is added in an amount comprised between 1.5 and 5 wt% with respect to the weight of elastomeric material.

The second treatment forms a coating layer distinct and separate from the fabric itself, which is also referred to in what follows as resistant layer 8 and is of the type described in the patent No. EP1157813.

A resistant layer 8 constitutes the working surface of the belt and hence increases further wear resistance thereof.

Advantageously, the fluorinated plastomer is present in the resistant layer in an amount in phr higher than the sum of the fluorinated elastomer and the second elastomeric material.

The thickness of the resistant layer 8 is advantageously comprised between 0.03 mm and 0.2 mm.

The resistant layer 8 can be laid over the fabric 5 in different ways. Preferably, it is laid by means of a calendering step.

Between the fabric 5 and the resistant layer 8 an adhesive material suited to fluorinated elastomers can be provided for improving adhesion of the resistant layer 8 on the fabric 5.

Preferably, in order to ensure the necessary resistance, the resistant layer 8 has a weight per unit area comprised between 50 and 120 g/m².

The belts according to the present invention are particularly suitable to be used in systems in direct contact with or partially immersed in oil. In particular, excellent results have been obtained in the case in which the belt is used as a replacement of the traditional gear or chain system within the engine block, i.e., systems in which the belt is exposed throughout its life to a continuous contact with splashes of oil or possibly also is partially immersed in an oil bath.

In this case, advantageously, the first and/or the second treatment is/are performed also on the back 6, when a covering fabric 7 is present on the back. In this case, the resistant layer 8 enables prevention of the penetration of the oil also on the back 6 of the toothed belt 1 and is particularly advantageous when the toothed belt 1 is used in control systems in which the back 6 of the belt is in contact with ?guide blocks or tensioners. In said systems, in fact, the oil remains between the surface of contact of the guide block or of the tensioner with the belt and the back of the belt itself, and hence the penetration within the mixture that constitutes the body thereof would be favoured.

Preferably, the toothed belt 1 can be treated over its entire outer surfaces and, in particular, on the sides 10 where the body mixture is more exposed to attack from oil, with a rubber resistant to swelling, for example ENDURLAST (Lord registered trademark).

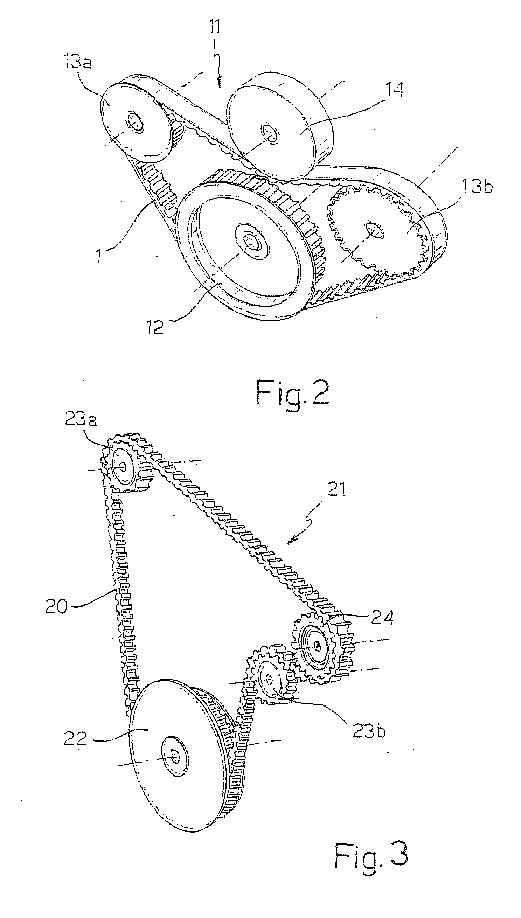

The belt 1 according to the present invention can be used, for example, in a distribution-control system in a motor vehicle of the type represented in Figure 2. The distribution-control system is designated in the figure as a whole by the reference number 11 and comprises a drive pulley 12 rigidly fixed to the engine shaft (not illustrated), a first driven pulley 13a and a second driven pulley 13b, and a tensioner 14 for tensioning the toothed belt.

According to a second alternative embodiment, illustrated in Figure 3, designated by the number 20 is a toothed belt according to the present invention, which has a toothing on both faces and has hence a resistant fabric that coats both of the toothings.

A toothed belt 20 can, for example, be used in a distribution-control system in a motor vehicle of the type represented in Figure 3. The distribution-control system is designated in the figure as a whole by the reference number 21 and comprises a drive pulley 22 rigidly fixed to the engine shaft (not illustrated), a first driven pulley 23a, a second driven pulley 23b, and a third driven pulley 24.

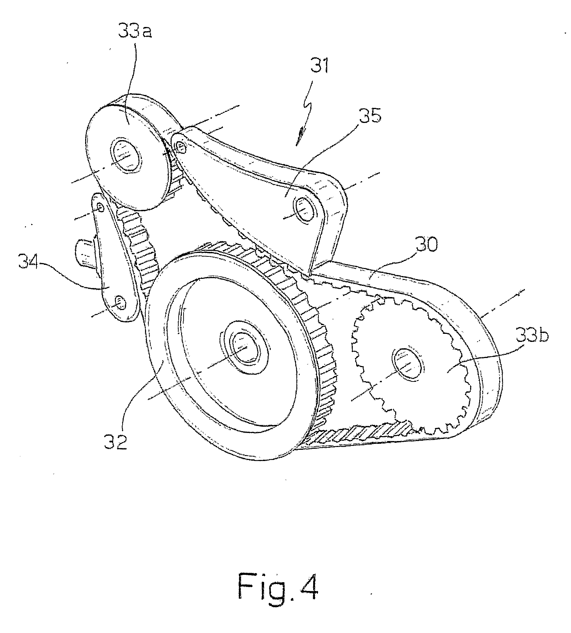

According to a third embodiment of the present invention, illustrated in Figure 4, a toothed belt 30 according to the present invention can advantageously be used in a distribution-control system designated in the figure as a whole by the reference number 31, which comprises a drive pulley 32 rigidly fixed to the engine shaft (not illustrated), a first driven pulley 33a and a second driven pulley 33b, a block tensioner 34 and a guide block 35.

In use, the toothed belts 1, 20 and 30 in the respective control systems 11, 21 and 31 are in direct contact with oil.

Figures 2 to 4 refer to control systems for the movement of balancing countershafts, but it is clear that the toothed belt according to the present invention can be used also in so-called "cam-to-cam" systems or for the movement of the oil pump. In these cases, during operation the belt is partially immersed in an oil bath.

In addition, it is also possible to use the belt of the present invention in the main transmission for the movement of the cams and also for the movement of the injection pump in diesel engines.

It has been experimentally found that the protective treatment for a fabric according to the present invention provides an effective barrier to oil and thus enables passing of the durability tests to which the toothed belts to be used in motor vehicles are subjected and hence enables all the problems of belts which in use come into contact with oil to be avoided and, in particular, degradation of the mechanical characteristics, lower adhesion, less efficient meshing, and lower wear resistance.

From an examination of the characteristics of the toothed belt made according to the present invention, the advantages that it enables emerge clearly.

In particular, it has been surprisingly found that, when a covering fabric 5 of a belt is subjected to a treatment according to the invention, the resistance to wear of the belt is further improved and moreover is able to stand up to the durability tests even when the belt is used in systems that are in direct contact with or partially immersed in oil and hence at a high temperature. Simultaneously moreover, during operation the belt presents a low noise level at both high and low r.p.m. and throughout the entire range of operating temperatures.

In addition, the belts according to the present invention undergo very little swelling, in particular when used in oil mixtureed with petrol.

Whereas some examples of embodiment have been described in order to illustrate the invention, it is clear that the person skilled in the branch can make modifications to the treatment described herein, without thereby departing from by the scope of the present invention. The toothed belt according to the present invention will in what follows be described also through examples, without this implying any limitation thereof.

### EXAMPLES 1-6

Given in Table 1 are the characteristics of some treatments for a fabric of a belt, obtained according to the present invention and according to the known art.

**Table 1**

| Example | WHITE STD | FL | FL3 | FL4 | FL2 | FL7 | FL8 |
|---|---|---|---|---|---|---|---|
| ZSC 2195 H | 100 | 30 | | | | | |
| ZSC 2095 | | | | 30 | 30 | 30 | 5 |
| DAI-EL G-801 | | | | | 70 | | |
| P757/30M | | 70 | 100 | 70 | | 100 | 136 |
| Fluon L 1700 (PTFE) | 125 | 50 | 70 | 80 | 100 | 56 | 45 |
| TRIGONOX 101-45 | | 3.3 | 3.3 | 3.3 | 3.3 | 3.3 | 3.3 |
| TAIC | | 1.8 | 3.5 | 1.8 | 1.8 | 1.8 | 1.8 |
| PERKADOX 14-40B-g | 6 | | | | | | |

where ZSC constitutes the second elastomeric material and is an HNBR modified with a zinc salt of a polymethacrylic acid;
DAI-EL is a fluorinated elastomer produced by Daikin;
P757/30M is a fluorinated elastomer mixtureed with 30 wt% of microcoagulated PTFE;
TRIGONOX is a peroxide used as vulcanizing agent;
TAIC is a triallylisocyanide; and
PERKADOX is a peroxide used as vulcanizing agent.

### EXAMPLE 6-12

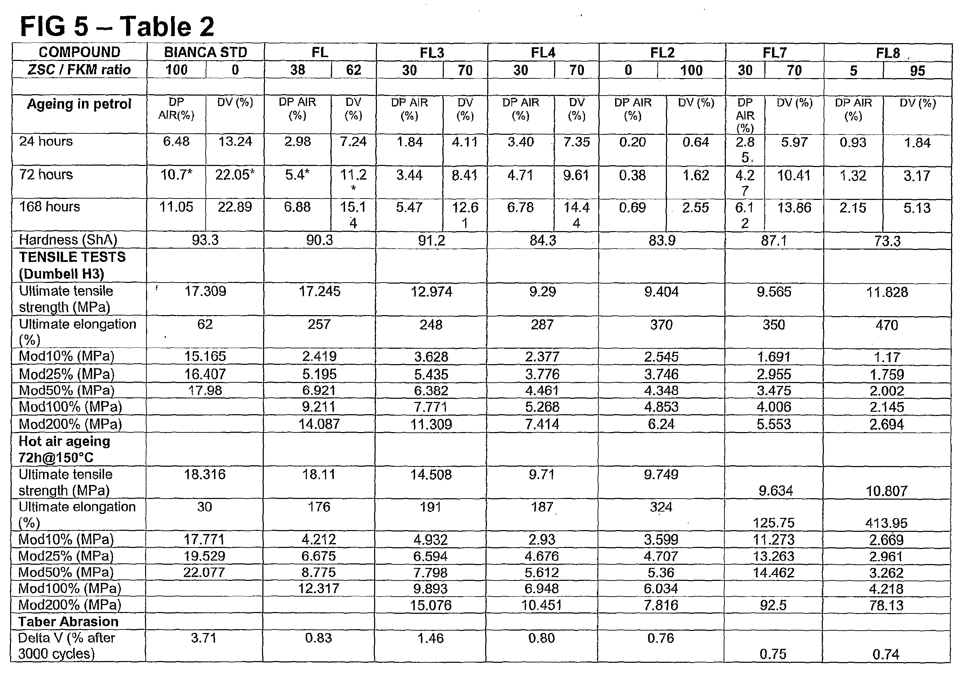

Given in Table 2 of Figure 5 are the results of the tests conducted on belts comprising the treatments according to the invention, where the compositions are the ones illustrated in Examples 2-8 of Table 1 and the comparative composition (Example 1) is obtained according to the known art.

All the belts comprise a body mixture consisting of HNBR with a composition and are made according to the process and with the materials illustrated in the patent No. EP1157813.

The tests conducted show that the treatments obtained according to the present invention allow belts to be obtained that present a better thermal resistance to chemical agents, in particular petrol, diesel oil, motor oil, and acids.

Surprisingly, the treatment according to the invention enables reduction of the swelling due to absorption of petrol when the belts are used in oil bath or directly in contact with oil and hence the possibility of limiting widening of the belts due to absorption of oil, whilst the original mechanical properties remain excellent and hold good even after thermal ageing in air.

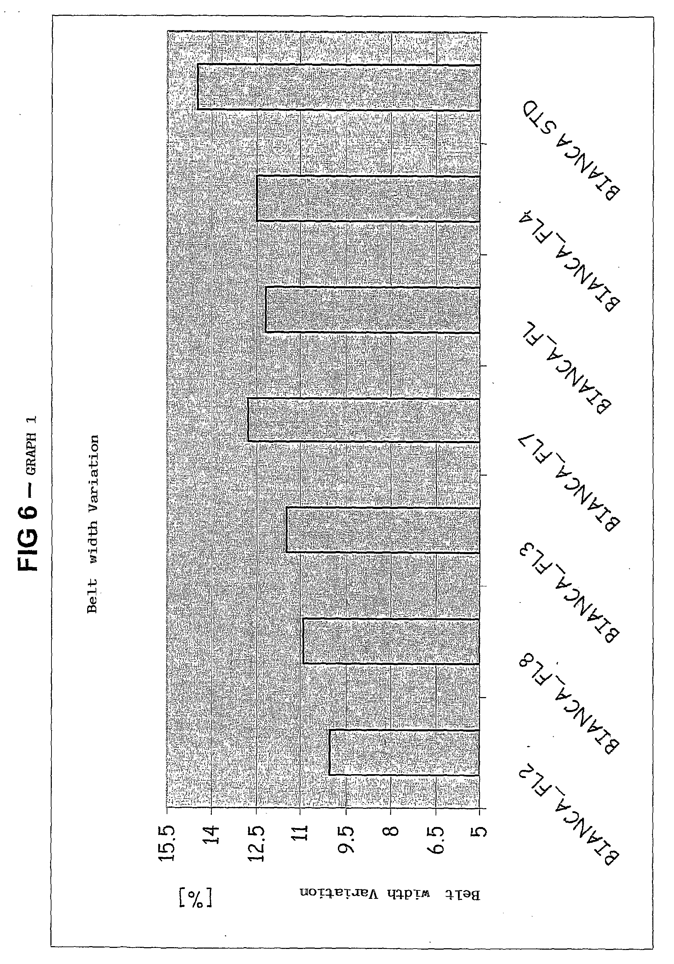

Given moreover in the graph of Figure 6 is the variation in the width of belts due to swelling and hence to absorption of oil. The belts are subjected to standard durability tests, as described in the patent No. EP1735543 in oil at a high temperature (140°C) mixtureed with 25% of petrol.

In order to conduct said tests, belts of standard width for use in motor vehicles were installed in control systems comprising a drive pulley, a driven pulley, and a tensioner, in which oil is sprayed through a tube directly on the belt.

The conditions in which the tests were conducted are given in Table 3.

**Table 3**

| Type of belt | Dayco 122RPP+150 |
|---|---|
| Engine rate | 6000 rpm |
| Specific load | 40 N/mm |
| Temperature of the oil | 140°C |
| Flowrate of oil | 22 l/h |
| Number of teeth of drive pulley | 22 |
| Number of teeth of driven pulley | 44 |
| Diameter of tensioner | 47 mm |

To compare the behaviour of the different treatments, the test were interrupted after 50 million cycles.

The comparative treatments obtained according to the known art, referred to as BIANCA STD, offers a poor protection to aggression of oil mixtureed with petrol, which results in a swelling of the belt i.e., in a width increased by 14.5% and in a consequent shorter duration of the belt itself.

All the treatments obtained according to the invention appearing in Table 1 which comprise a fluorinated elastomer showed, instead, a clear improvement of this parameter, which does not exceed 9.5%. Said value results in a very high increase in belt life.

### EXAMPLES 13-15

There followed a verification of the degree of swelling directly on the mixturees used for treating the covering fabric for belts.

A known mixture used for treating the covering fabric for toothed belts, which was made entirely of HNBR, was compared with a fabric-treatment mixture made of fluorinated elastomer, with 100 phr of fluorinated elastomer for the belt referred to as FKM, and 70 phr of fluorinated elastomer and 30 phr of ZSC for the belt referred to as FKM/HNBR, as shown in Table 4.

**Table 4 - Composition of the fabric-treatment mixturees comprising fluorinated elastomer**

| | FKM | | FKM/HNBR | |
|---|---|---|---|---|
| | wt% | PHR | wit% | PHR |
| P757/30M | 77.88 | 100 | 54.95 | 70 |
| ZSC 2095 | 0 | 0 | 23.55 | 30 |
| TRIGONOX 101-45B-P | 2.65 | 3.4 | 2.67 | 3.4 |
| TAIC M-70 | 3.89 | 5 | 3.24 | 4 |
| IRMAX FLOFORM MT 990 | 15.58 | 20 | 15.7 | 20 |

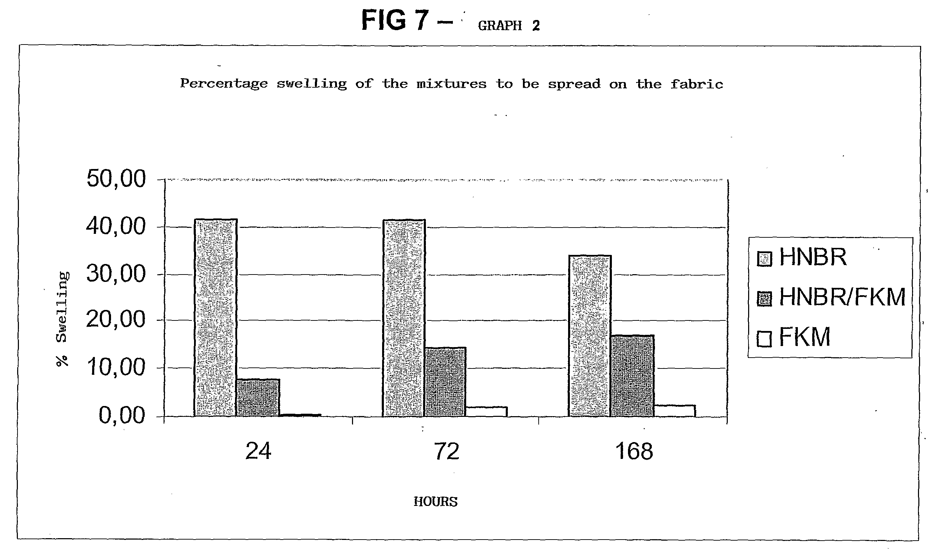

All three mixturees were subjected to an ageing test in pure petrol, and the volume percentage swelling of the mixture was measured after 24, 72 and 168 hours, and the values appearing in Table 5 and also represented in Graph 2 of Figure 7 were obtained.

**Table 5**

| Ageing in petrol (hours) - Belt body | | | |
|---|---|---|---|
| | 24 h | 72 h | 168 h |
| HNBR | 41.49 | 41.49 | 33.94 |
| HNBR/FKM | 7.79 | 14.51 | 16.74 |
| FKM | 0.56 | 2.06 | 2.32 |

It may be noted how the values of swelling of the mixturees for treating the covering fabric for toothed belts made according to the present invention and hence including different percentages of fluorinated elastomer present a degree of swelling much lower than that of the comparison mixture.

### EXAMPLES 16-18

The next step was to verify the degree of swelling directly on the mixturees used as body mixture for the belts.

Given in Table 6 are the compositions of the body mixture of belts comprising a fluorinated elastomer, which were compared with a mixture referred to as "HNBR" (in Table 1 also indicated as BIANCA STD) entirely made of HNBR.

**Table 6-Composition of the body mixture**

| Example | FKM-Body | | FKM/HNBR-Body | |
|---|---|---|---|---|
| | wt% | phr | wt% | phr |
| DAI-EL G-801 | 69.69 | 100 | 48.81 | 70 |
| ZSC 2095 | 0 | 0 | 20.92 | 30 |
| TRIGONOX 101-45B-P | 2.09 | 3 | 2.37 | 3.4 |
| TAIC-50 | 2.09 | 3 | 1.39 | 2 |
| HALLBOND RX-13946-D | 1.74 | 2.5 | 2.09 | 3 |
| IRMAX FLOFORM MT 990 | 13.94 | 20 | 13.95 | 20 |
| TECHNORA ZCF 1-12 T323 SB | 10.45 | 15 | 10.46 | 15 |

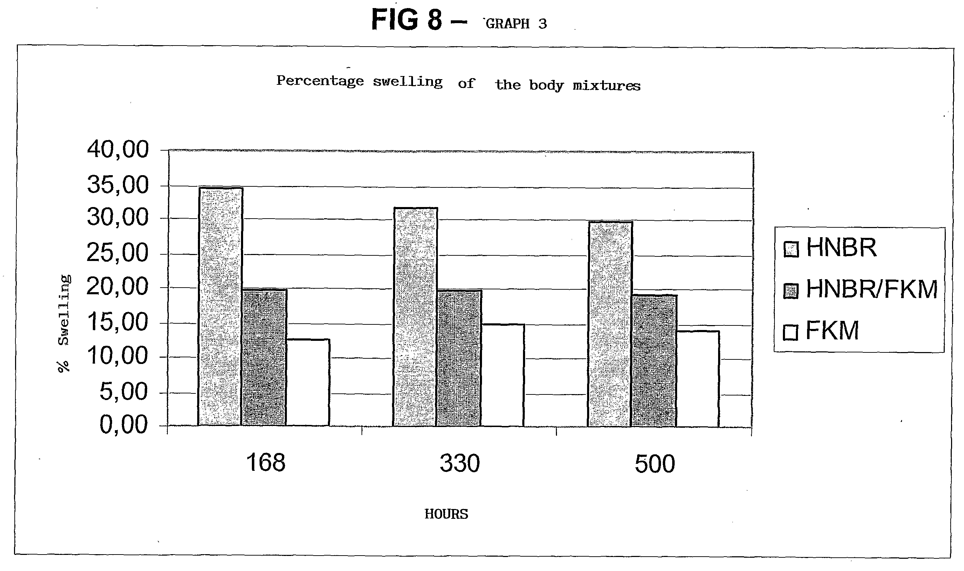

All three mixturees were subjected to an ageing test in pure petrol, and the degrees of swelling of the mixturees were measured after 168, 330 and 500 hours to obtain the values in volume percentage appearing in Table 7 and also given in Graph 3 of Figure 8.

**Table 7**

| Ageing in petrol (hours) - Fabric treatment | | | |
|---|---|---|---|
| Mixture | 168 h | 330 h | 500 h |
| HNBR | 34.63 | 31.69 | 29.69 |
| HNBR/FKM | 19.59 | 19.83 | 19.13 |
| FKM | 12.60 | 15.00 | 13.86 |

Also in this case it may be noted how the values of swelling of the body mixturees containing fluorinated elastomer are much lower than the value for the comparison mixture.

### EXAMPLES 18-21

The effect on the degree of swelling of the belts was then assessed in a system in which the belts function in direct contact with oil within the engine block or even partially immersed in oil.

As in the graph of Figure 6, there moreover appears the variation in the width of the belts of Table 6, when they were subjected to a durability test in oil at high temperature (140°C) mixed with 25 wt% of petrol, i.e. belts comprising a body mixture made entirely of HNBR (referred to as "comparison HNBR" with 100 phr of HNBR, a belt comprising a body mixture made of 70 phr of FKM and 30 phr of HNBR, and finally a belt comprising a body mixture 100 phr of FKM). To enable a clearer comparison in these examples, the belts were provided with just one coating treatment according to the known art described in the patent No. EP1157813, i.e., without fluorinated elastomers.

The conditions in which the test was conducted were the same as the ones for the previous tests for evaluating the degree of swelling of the belts of Examples 6-12. Also in this case, in order to compare the behaviour of the different treatments, the test was interrupted after 50 million cycles.

The belts that had a body mixture comprising a fluorinated elastomer enabled a clear improvement to be obtained in terms of smaller degree of swelling, not exceeding 4.5%. Said value results in a corresponding very high increase in the belt life.

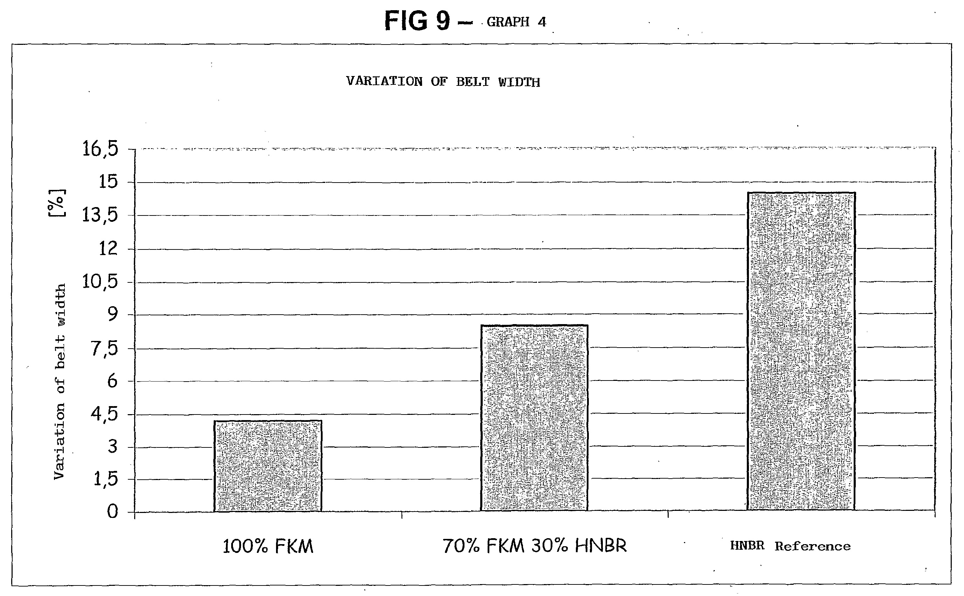

Figure 9 represents a graph of the results of the tests from which it is evident that belts having body mixturees comprising a fluorinated elastomer present a smaller widening of the belt and hence a lower degree of swelling in oil. Said belts will hence have a much longer life when used in a system in which the belt is in direct contact with oil or partially immersed in oil.

## Claims

1. A toothed belt comprising a body (2) made of a first elastomeric material comprising a working surface (4) covered with a fabric (5), said fabric having been subjected to a first treatment, said belt being **characterized in that** said first treatment provides a coating comprising at least one fluorinated elastomer and an antifriction agent chosen in the group constituted by fluorinated plastomer, molybdenum sulphide, graphite, copper dust.

2. The belt according to Claim 1, **characterized in that** said first treatment comprises:
a) from 0 wt% to 95 wt%, with respect to the total weight of the elastomers in the treatment, of a second elastomeric material obtained starting from a diene monomer and a monomer containing nitrile groups;
b) from 5 wt% to 100 wt%, with respect to the total weight of the elastomers in the treatment, of a fluorinated elastomer;

3. The belt according to any one of the preceding claims, **characterized in that** said fluorinated elastomer is present in an amount of 100 wt%.

4. The belt according to any one of claims 2 to 3, **characterized in that** said second elastomeric material is present in an amount comprised between 5 wt% and 95 wt%.

5. The belt according to any one of claims 2 to 3, **characterized in that** said second elastomeric material is present in a weight ratio comprised between 1:3 and 3:1 with respect to said fluorinated elastomer.

6. The belt according to any one of Claims 2 to 5, **characterized in that** said second elastomeric material is chosen in the group constituted by HNBR, XHNBR or mixtures thereof.

7. The belt according to any one of Claims 2 to 6, **characterized in that** said second elastomeric material is added with a salt of an unsaturated carboxylic acid.

8. The belt according to any one of the preceding claims, **characterized in that** it is subjected to a first treatment and to a second treatment and **in that** said first treatment is performed with a composition comprising a fluorinated elastomer and said second treatment is performed with a composition comprising a fluorinated plastomer.

9. The belt according to any one of the preceding claims, **characterized in that** said first elastomeric material comprises fibres.

10. The belt according to any one of the preceding claims, **characterized in that** said fluorinated elastomer is a copolymer chosen in the group constituted by fluoride - hexafluoropropylene, vinylidenfluoride-hexafluoropropylene, vinylidenfiuoride-hexafluoropropylene-tetrafluoroethylene, vinylidenfluoride-tetrafluoroethyfene-perfluorovinylether, tetrafluoroethylene-perfluorovinylether, tetrafluoroethylene-propylene, tetraffuoroethylene-propylene- vinylidenfluoride, hexafluoropropylene/vinylidenfluoride/tetrafluoroethylene/bromo- or iodo- or chloro-olefin fluorinated tetrapolymer, and mixtures of these polymers.

11. Use of a belt according to any one of Claims 1 to 10 in a system in which said toothed belt is in direct contact with oil or partially immersed in oil.

## Patentansprüche

1. Zahnriemen mit einem aus einem ersten elastomeren Material gefertigten Körper (2), der eine Arbeitsoberfläche (4) umfasst, die mit einem Gewebe (5) bedeckt ist, wobei das Gewebe einer ersten Behandlung unterzogen wurde, und wobei der Riemen **dadurch gekennzeichnet ist, dass** die erste Behandlung eine Beschichtung vorsieht, die wenigstens ein fluoriertes Elastomer und ein Antifriktionsmittel umfasst, das aus der Gruppe ausgewählt wird, die aus fluoriertem Plastomer, Molybdänsulfid, Grafit und Kupferstaub besteht.

2. Riemen nach Anspruch 1, **dadurch gekennzeichnet, dass** die erste Behandlung umfasst:
a) 0 Gew.-% bis 95 Gew.-%, bezogen auf das Gesamtgewicht der Elastomere in der Behandlung, eines zweiten elastomeren Materials, das ausgehend von einem Dienmonomer und einem Nitrilgruppen enthaltenen Monomer erhalten wird,
b) 5 Gew.-% bis 100 Gew.-%, bezogen auf das Gesamtgewicht der Elastomere in der Behandlung, eines fluorierten Elastomers.

3. Riemen nach einem der vorhergehenden Ansprüche, **dadurch gekennzeichnet, dass** das fluorierte Elastomer in einer Menge von 100 Gew.-% vorhanden ist.

4. Riemen nach einem der Ansprüche 2 bis 3, **dadurch gekennzeichnet, dass** das zweite elastomere Material in einer Menge vorhanden ist, die zwischen 5 Gew.-% und 95 Gew.-% beträgt.

5. Riemen nach einem der Ansprüche 2 bis 3, **dadurch gekennzeichnet, dass** das zweite elastomere Material in einem Gewichtsverhältnis vorhanden ist, das bezogen auf das fluorierte Elastomer zwischen 1:3 und 3:1 beträgt.

6. Riemen nach einem der Ansprüche 2 bis 5, **dadurch gekennzeichnet, dass** das zweite elastomere Material aus der Gruppe ausgewählt wird, die aus HNBR, XHNBR oder Gemischen daraus besteht.

7. Riemen nach einem der Ansprüche 2 bis 6, **dadurch gekennzeichnet, dass** dem zweiten elastomeren Material ein Salz einer ungesättigten Carbonsäure hinzugefügt wird.

8. Riemen nach einem der vorhergehenden Ansprüche, **dadurch gekennzeichnet, dass** er einer ersten Behandlung und einer zweiten Behandlung unterzogen wird und dass die erste Behandlung mit einer Zusammensetzung durchgeführt wird, die ein fluoriertes Elastomer enthält, und die zweite Behandlung mit einer Zusammensetzung durchgeführt wird, die ein fluoriertes Plastomer enthält.

9. Riemen nach einem der vorhergehenden Ansprüche, **dadurch gekennzeichnet, dass** das erste elastomere Material Fasern umfasst.

10. Riemen nach einem der vorhergehenden Ansprüche, **dadurch gekennzeichnet, dass** das fluorierte Elastomer ein Copolymer ist, das aus der Gruppe ausgewählt wird, die aus Fluorid-Hexafluorpropylen, Vinylidenfluorid-Hexafluorpropylen, Vinylidenfluorid-Hexafluorpropylen-Tetrafluorethylen, Vinylidenfluorid-Tetrafluorethylen-Perfluorvinylether, Tetrafluorethylen-Perfluorvinylether, Tetrafluorethylen-Propylen, Tetrafluorethylen-Propylen-Vinylidenfluorid, Hexafluorpropylen-/Vinylidenfluorid-/Tetrafluorethylen-/Brom- oder Jod- oder Chlorolefin fluoriertem Tetrapolymer und Gemischen dieser Polymere besteht.

11. Verwendung eines Riemens nach einem der Ansprüche 1 bis 10 in einem System, in dem der Zahnriemen in direktem Kontakt mit Öl steht oder teilweise in Öl eingetaucht ist.

## Revendications

1. Courroie dentée comprenant un corps (2) constitué d'un premier matériau élastomérique comprenant une surface de travail (4) couverte d'un tissu (5), ledit tissu ayant été soumis à un premier traitement, ladite courroie étant **caractérisée en ce que** ledit premier traitement fournit un revêtement comprenant au moins un élastomère fluoré et un agent antifriction choisi dans le groupe constitué par un plastomère fluoré, le sulfure de molybdène, le graphite et la poussière de cuivre.

2. Courroie selon la revendication 1, **caractérisée en ce que** ledit premier traitement comprend :
a) de 0 % en poids à 95 % en poids, par rapport au poids total des élastomères dans le traitement, d'un second matériau élastomérique obtenu à partir d'un monomère de diène et d'un monomère contenant des groupes nitrile ;
b) de 5 % en poids à 100 % en poids, par rapport au poids total des élastomères dans le traitement, d'un élastomère fluoré.

3. Courroie selon l'une quelconque des revendications précédentes, **caractérisée en ce que** ledit élastomère fluoré est présent dans une quantité de 100 % en poids.

4. Courroie selon l'une quelconque des revendications 2 à 3, **caractérisée en ce que** ledit second matériau élastomérique est présent dans une quantité comprise entre 5 % en poids et 95 % en poids.

5. Courroie selon l'une quelconque des revendications 2 à 3, **caractérisée en ce que** ledit second matériau élastomérique est présent dans un rapport en poids compris entre 1 : 3 et 3 : 1 par rapport audit élastomère fluoré.

6. Courroie selon l'une quelconque des revendications 2 à 5, **caractérisée en ce que** ledit second matériau élastomérique est choisi dans le groupe constitué par HNBR, XHNBR ou leurs mélanges.

7. Courroie selon l'une quelconque des revendications 2 à 6, **caractérisée en ce que** ledit second matériau élastomérique est ajouté avec un sel d'un acide carboxylique insaturé.

8. Courroie selon l'une quelconque des revendications précédentes, **caractérisée en ce qu'**elle est soumise à un premier traitement et à un second traitement et **en ce que** ledit premier traitement est réalisé avec une composition comprenant un élastomère fluoré et ledit second traitement est réalisé avec une composition comprenant un plastomère fluoré.

9. Courroie selon l'une quelconque des revendications précédentes, **caractérisée en ce que** ledit premier matériau élastomérique comprend des fibres.

10. Courroie selon l'une quelconque des revendications précédentes, **caractérisée en ce que** ledit élastomère fluoré est un copolymère choisi dans le groupe constitué par le fluorure-hexafluoropropylène, le fluorure de vinylidène-hexafluoropropylène, le fluorure de vinylidène-hexafluoropropylène-tétrafluoroéthylène, le fluorure de vinylidène-tétrafluoroéthylène-perfluorovinyléther, le tétrafluoroéthylène-perfluorovinyléther, le tétrafluoroéthylène-propylène, le tétrafluoroéthylène-propylène-fluorure de vinylidène, le tétrapolymère fluoré hexafluoropropylène/fluorure de vinylidène/tétrafluoroéthylène/bromo- ou iodo- ou chloro-oléfine, et les mélanges de ces polymères.

11. Utilisation d'une courroie selon l'une quelconque des revendications 1 à 10, dans un système dans lequel ladite courroie dentée est en contact direct avec de l'huile ou immergée partiellement dans de l'huile.
